# EUROPEAN PATENT SPECIFICATION

(11) **EP 3 744 217 B1**
(45) Date of publication and mention of the grant of the patent: **25.01.2023**
(21) Application number: 19218981.9
(22) Date of filing: 20.12.2019
(51) Int. Cl.: A47J 31/20, A47J 27/00, A47J 31/06

(54) **COOKING POT**
KOCHTOPF
POT DE CUISSON

(30) Priority: 31.05.2019 CN 201910468918; 31.05.2019 CN 201920836362 U
(43) Date of publication of application: 02.12.2020
(73) Proprietor: Guangdong Midea Consumer Electrics Manufacturing Co., Ltd., Foshan City, Guangdong 528311 (CN)
(72) Inventor: NAN, Chunlai, FOSHAN, Guangdong 528311 (CN); LUO, Jinliusheng, FOSHAN, Guangdong 528311 (CN)
(74) Representative: RGTH

(56) References cited:
- DE-A1- 3 843 140
- US-A- 2 329 316
- US-A1- 2009 007 791

## Description

### FIELD

The present disclosure relates to a technology field of kitchen equipment, more particularly to a health care pot.

### BACKGROUND

In today's life, people pay more and more attention to health care, and the Chinese people's health care concept is deep, so electric heating health care pot that can cook nutritious food and soup enters thousands of households.

In the related art, a liquid level in the health care pot is not variable. If the foodstuff (such as tea) in an upper part is to be immersed, the amount of water added must be sufficient, the water consumption is large, and the food is soaked in water for a long time, resulting in liquid such as foodstuff or tea water to taste worse, and even deterioration of the foodstuff may occur.

DE 38 431 40 A1 discloses an electric kettle, comprising a body portion which may be placed on a foot part. The foot part comprises a heating device for heating water inside the body portion via a conduction plate. The kettle comprises a containing portion which extends into the body portion. The containing portion is distanced from a base of the body portion by a shell surface and comprises a containing base and a pressure pipe extending through the containing portion and abuts into a spring. The shell surface forms a pressure cavity with the base of the body portion and is pressed against the base of the body portion by the spring.

### SUMMARY

The present disclosure aims to solve at least one of the technical problems existing in the related art, especially preventing food from being soaked in water for a long period of time during cooking. To this end, the present disclosure provides a health care pot, a liquid level of the health care pot can be changed, taking into account the requirement of less water consumption and good mouthfeel, and a shower area of the foodstuff is large, and the shower is more sufficient.

The health care pot according to the present disclosure comprising:
a body portion defining a cooking cavity therein;
a containing portion extending into the cooking cavity;
a medium replacement portion provided in the cooking cavity, wherein the medium replacement portion is connected to the containing portion, and wherein the medium replacement portion is configured to replace a second medium in a liquid state located in the medium replacement portion with a first medium so that the replaced second medium is allowed to be discharged out of the medium replacement portion to enable a liquid level in the cooking cavity to rise from a lower level to a higher level, a communication area communicating the containing portion and the cooking cavity is provided in a peripheral wall of the containing portion, the medium replacement portion is further configured to enable the second medium located outside the medium replacement portion and in the liquid state to enter the medium replacement portion so as to occupy at least a part of space occupied by the first medium, and a lowest water entry point of the communication area is higher than the lower level and lower than the higher lever. An upper edge of the containing portion is provided with a snap-fit flange, and the snap-fit flange is snap-fitted with the body portion.

In the health care pot according to the embodiments of the present disclosure, the liquid level in the cooking cavity can be changed by the medium replacement portion, and the containing portion cannot be entered when the liquid level is low, which can prevent the foodstuff from being soaked for a long time and affecting the taste or deterioration, and is healthier and hygienic. When the liquid level is higher than the lowest water entry point of the communication area, the liquid can enter the containing portion from the peripheral wall of the containing portion, so that the food is showered from the outside to the inside, the shower area is larger, the shower amount is large, and the shower is more sufficient. It is beneficial to reduce the amount of water consumption, and at the same time obtain a better taste of the foodstuff or tea and other liquids, the containing portion is easier to clean, which is conducive to improve the user experience.

In addition, the health care pot according to the above embodiments of the present disclosure may further have the following additional technical features.

According to some embodiments of the present disclosure, the communication area is configured to have at least one through hole, and a lowest point of the at least one through hole is higher than the lower level and lower than the higher level.

Further, a plurality of through holes is provided, at least two through holes are spaced apart in a circumferential direction of the containing portion, and a lowest point of the at least two through holes spaced apart in the circumferential direction is higher than the lower level and lower than the higher level separately.

According to some embodiments of the present disclosure, a plurality of through holes is provided, at least two through holes are spaced apart in an axial direction of the containing portion, and a lowest point of the at least two through holes spaced apart in the axial direction is higher than the lower level and lower than the higher level separately.

According to some embodiments of the present disclosure, a highest point of at least one through hole is higher than the higher level.

According to some embodiments of the present disclosure, a plurality of through holes is defined in the communication area, and the plurality of through holes is arranged into an array along a first direction and a second direction, and the first direction intersects with the second direction.

Further, the first direction is an axial direction of the containing portion, and the second direction is a circumferential direction of the containing portion.

According to some embodiments of the present disclosure, the through hole is a circular hole, and a diameter D of the circular hole satisfies: 1mm≤D≤8mm.

According to some embodiments of the present disclosure, a cross section of at least a lower part of the peripheral wall of the containing portion is formed to be circular and the communication area is at least disposed to the lower part of the peripheral wall of the containing portion.

Optionally, at least the lower part of the peripheral wall of the containing portion is cylindrical and has an inner diameter of 20mm-120mm, preferably 60mm.

According to some embodiments of the present disclosure, the peripheral wall of the containing portion comprises: a first cylindrical section, wherein the communication area is provided in the first cylindrical section; a second cylindrical section, wherein the second cylindrical section is coaxially disposed above the first cylindrical section and an inner diameter of the second cylindrical section is greater than an inner diameter of the first cylindrical section, and an upper opening of the second cylindrical section forms into a placing opening; a diameter variable connecting section, wherein a lower edge of the diameter variable connecting section is connected to an upper edge of the first cylindrical section, and an upper edge of the diameter variable connecting section is connected to a lower edge of the second cylindrical section, and the diameter variable connecting section extends obliquely upwards and outwards relative to an axial direction of the first cylindrical section.

Further, the body portion comprises a pot body portion and an upper cover portion, and the snap-fit flange is snap-fitted with the pot body portion or the upper cover portion.

According to some embodiments of the present disclosure, and a lower part of the medium replacement portion is supported on the body portion or in the body portion by means of a supporting bracket.

According to some embodiments of the present disclosure, the body portion comprises a pot body portion and an upper cover portion, the containing portion extends into the pot body portion, the medium replacement portion is disposed inside the pot body portion; a peripheral wall of the medium replacement portion and the peripheral wall of the containing portion merge together, or the medium replacement portion and the containing portion are connected by snap-fitting, welding, or riveting.

Optionally, the containing portion is a metal piece or a glass piece, and the medium replacement portion is the metal piece or the glass piece.

According to some embodiments of the present disclosure, a cross section of the medium replacement portion is formed to be circular, and a lower part of the medium replacement portion is provided with a medium outlet used for the second medium to be discharged.

According to some embodiments of the present disclosure, the medium replacement portion is configured to be able to replace the second medium in the liquid state with the first medium at a preset time, and the preset time is selectable to be variable or fixed.

Further, the communication area is configured in such a way that foodstuff in the containing portion is allowed to enter the cooking cavity through the communication area under an action of liquid entering the containing portion.

Further, a plurality of elongated through holes is defined in the communication area.

Further, the plurality of through holes is spaced apart along a circumferential direction of the containing portion, and a length direction of each of the through hole extends along an axial direction of the containing portion.

According to some embodiments of the present disclosure, the medium replacement portion is configured as a gas-liquid replacement portion, and the gas-liquid replacement portion is configured to replace the second medium in the liquid state with the first medium in a gas state.

Further, the heath care pot is provided with a controllable heating member therein, and the heating member is suitable to heat liquid to produce steam to form the first medium.

According to some embodiments of the present disclosure, the medium replacement portion is connected to a lower part of the containing portion, and a bottom wall of the containing portion is provided with a micro gas vent communicating the containing portion and the medium replacement portion so as to discharge gas.

Additional aspects and advantages of the disclosure will be set forth in part in the description which follows, part will become apparent from the description below, or learned by the practice of the disclosure.

### BRIEF DESCRIPTION OF THE DRAWINGS

The above and/or additional aspects and advantages of the present disclosure will become apparent and readily understood from the description of the embodiments, in which:
Fig. 1 is a schematic structural view of a health care pot according to an embodiment of the present disclosure;
Fig. 2 is a top plan view of a health care pot according to an embodiment of the present disclosure;
Fig. 3 is a sectional view of the health care pot in accordance with an embodiment of the present disclosure in the direction indicated by line A-A in Fig. 2, in which a liquid level in a cooking cavity is at a lower level;
Fig. 4 is a sectional view of the health care pot in accordance with an embodiment of the present disclosure in the direction indicated by line A-A in Fig. 2, in which a liquid level in a cooking cavity is at a higher level;
Fig. 5 is a schematic enlarged view of portion B circled in Fig. 4;
Fig. 6 is a schematic structural view of a containing basket of a health care pot according to an embodiment of the present disclosure;
Fig. 7 is a front elevational view of a containing basket of a health care pot according to an embodiment of the present disclosure;
Fig. 8 is a top plan view of a containing basket of a health care pot according to an embodiment of the present disclosure;
Fig. 9 is a sectional view of Fig. 8 taken along the line C-C;
Fig. 10 is a schematic enlarged view of portion D circled in Fig. 9;
Fig. 11 is a sectional view of a health care pot in accordance with another embodiment of the present disclosure in the direction indicated by the line A-A in Fig. 2, in which the liquid level in the cooking cavity is at a lower level;
Fig. 12 is a sectional view of a health care pot in accordance with another embodiment of the present disclosure in the direction indicated by the line A-A in Fig. 2, in which the liquid level in the cooking cavity is at a higher level;
Fig. 13 is a front elevational view of a containing basket of a health care pot according to another embodiment of the present disclosure;
Fig. 14 is a plan view of a containing basket of a health care pot according to another embodiment of the present disclosure; and
Fig. 15 is a sectional view of Fig. 14 taken along the line E-E.

Reference numerals:
health care pot 100; foodstuff 200;
body portion 10; cooking cavity 101; pot body portion 11; upper cover portion 12;
containing portion 20; communication area 201; through hole 202; containing cavity 203; first cylindrical section 21; second cylincdrical section 22; diameter variable connecting section 23; snap-fit flange 24;
medium replacement portion 30; medium outlet 301; micro gas vent 302; medium replacement cavity 303;
containing basket 40.

### DETAILED DESCRIPTION

Embodiments of the present disclosure will be described in detail and examples of the embodiments will be illustrated in the drawings, where same or similar reference numerals are used to indicate same or similar members or members with same or similar functions. The embodiments described herein with reference to drawings are explanatory, which are used to illustrate the present disclosure, but shall not be construed to limit the present disclosure.

In the specification, unless specified or limited otherwise, relative terms such as "central", "longitudinal", "lateral", "length", "width", "thickness", "up", "down", "front", "rear", "right", "left", "vertical", "horizontal", "top", "bottom", "inner", "outer", "clockwise", "counter- clockwise" as well as derivative thereof should be construed to refer to the orientation as then described or as shown in the drawings under discussion. These relative terms are for convenience of description and do not require that the present disclosure be constructed or operated in a particular orientation, thus cannot be construed to limit the present disclosure.

A health care pot 100 according to an embodiment of the present disclosure will now be described with reference to the accompanying drawings.

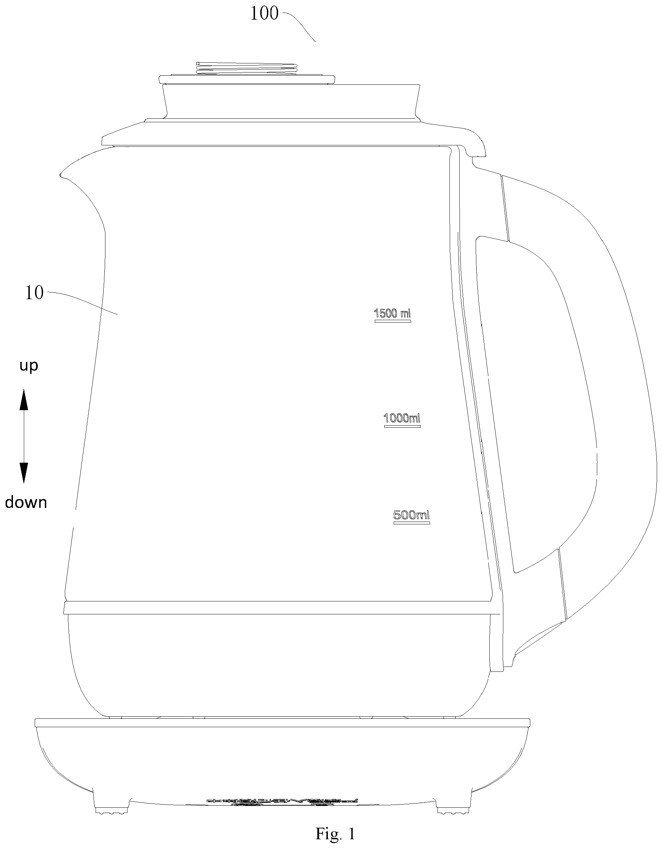

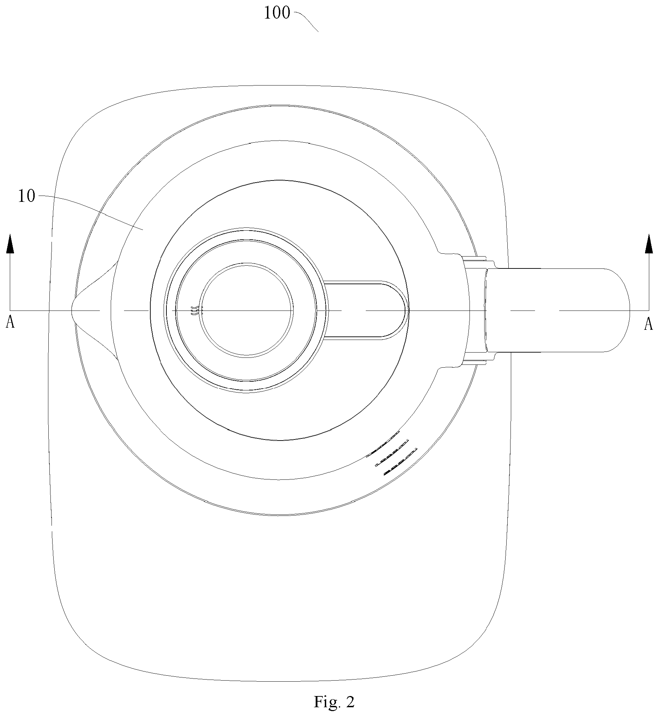

Referring to Figs. 1 to 4, the health care pot 100 according to the embodiment of a first aspect of the present disclosure may include a body portion 10, a containing portion 20, and a medium replacement portion 30.

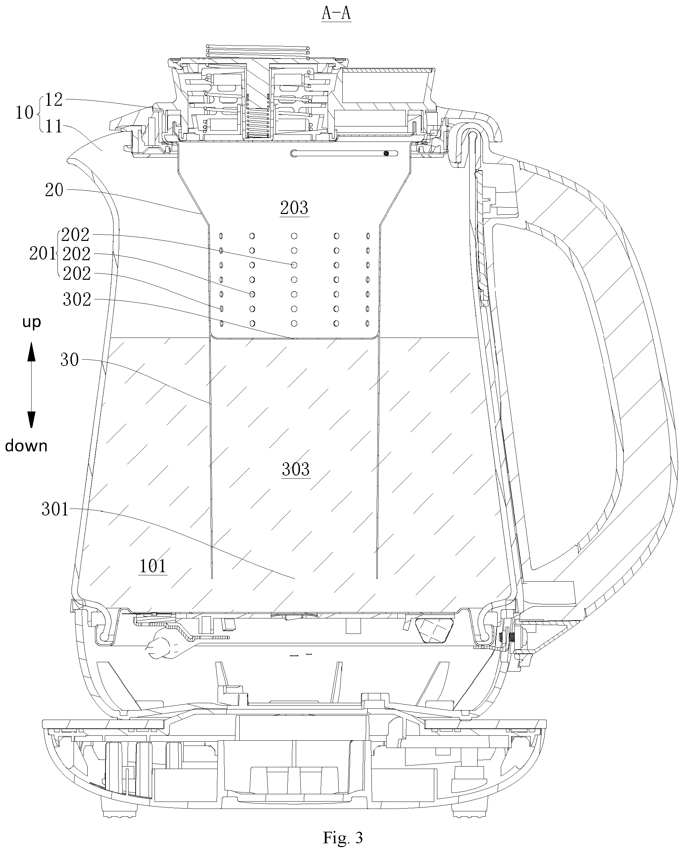

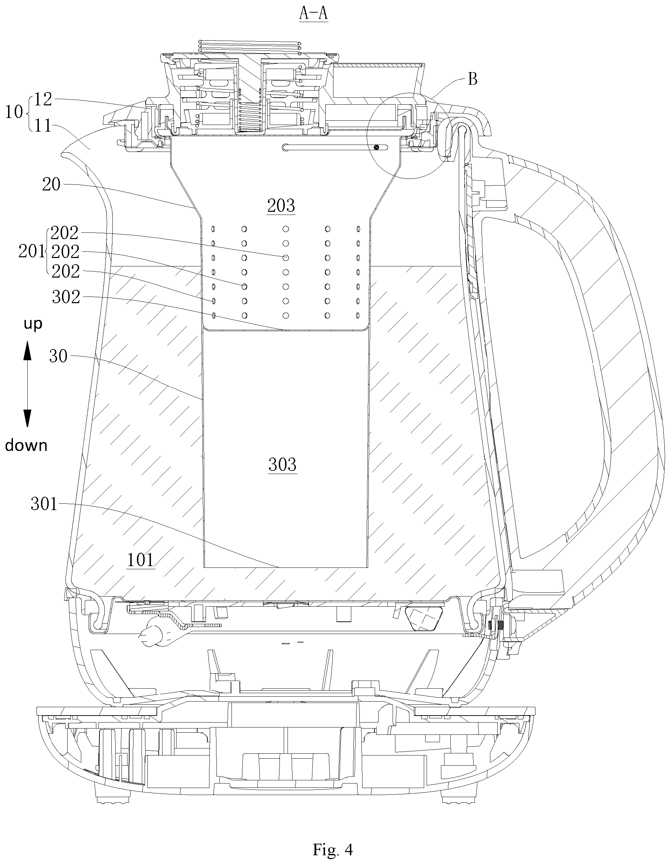

Specifically, as shown in Figs. 3 and 4, the body portion 10 has a cooking cavity 101 therein, and the containing portion 20 can extend into the cooking cavity 101, and the medium replacement portion 30 can be disposed in the cooking cavity 101. The medium replacement portion 30 is for realizing replacement of the first medium and the second medium, thereby changing the liquid level in the cooking cavity 101.

For example, the medium replacement portion 30 is provided to replace the liquid second medium located in the medium replacement portion 30 with the first medium, so that the replaced second medium can be discharged out of the medium replacement portion 30 to make the liquid level in the cooking cavity 101 to rise from the lower level to the higher level. It should be noted that the higher level and the lower level can be understood as the liquid level when the liquid level in the cooking cavity 101 is at a higher level is higher than the liquid level when the liquid level is at the lower level in an up and down direction, and the lower level and the higher level are not limited to the level shown in the figure. In actual use, the specific positions of the lower and higher levels will change correspondingly with the amount of water added by the user. Also, the peripheral wall of the containing portion 20 is provided with a communication area 201 that communicates the containing portion 20 and the cooking cavity 101, and the lowest water entry point of the communication area 201 is higher than the lower level and lower than the higher level. It should be noted that the first medium may be water vapor, and the second medium may be water, but the disclosure is not limited thereto.

Therefore, when the first medium does not replace the second medium located in the medium replacement portion 30, the foodstuff 200 is placed in the containing portion 20, and the liquid level in the cooking cavity 101 is at a lower level, so that the liquid in the cooking cavity 101 cannot enter the containing portion 20, that is, the liquid cannot come into contact with the foodstuff 200. During the process of the second medium in the medium replacement portion 30 being replaced by the first medium to make the liquid level in the cooking cavity 101 to rise up, when the liquid level is higher than the lowest water entry point of the communication area 201, the liquid in the cooking cavity 101 enters the containing portion 20 through the communication area 201 so as to come into contact with the foodstuff 200 in the containing portion 20 to realize cooking. That is to say, only when the liquid level in the cooking cavity 101 rises, the foodstuff 200 may be in contact with the liquid for cooking, and when the liquid level does not rise, the foodstuff 200 is separated from the liquid, and the foodstuff 200 is prevented from being soaked for a long time to affect the taste of the foodstuff 200 or the liquid, which also avoids the deterioration of the foodstuff 200 when they are soaked for a long time.

For example, in an embodiment in which the health care pot 100 has a reservation function, the medium replacement portion 30 is provided to be capable of replacing the liquid second medium with the first medium at a set time. The user can place the foodstuff 200 in the containing portion 20 in advance, and add the liquid into the cooking cavity 101. The liquid second medium in the medium replacement portion 30 may be the same as or different from the liquid in the cooking cavity 101. When the set time is reached, the first medium replaces the liquid second medium to raise the liquid level in the cooking cavity 101, and the liquid in the cooking cavity 101 enters the containing portion 20 to contact the foodstuff 200, thereby facilitating the realization of the no water reservation function, and the foodstuff 200 are cooked more healthily.

For another example, the medium replacement portion 30 is further configured to enable the second medium located outside the medium replacement portion 30 and in the liquid state to enter the medium replacement portion 30 so as to occupy at least a part of space occupied by the first medium to enable the liquid level in the cooking cavity to drop, and the liquid in the containing portion 20 can be returned to the cooking cavity 101 through the communication area 201 and further into the medium replacement portion 20. For example, when the health care pot 100 stops heating or the heating power decreases, the first medium in the medium replacement portion 30, such as water vapor, liquefies, and the liquid second medium such as water, enters the medium replacement portion 30, replacing the space occupied by the previous first medium.

Optionally, when the internal volume of the medium replacement portion 30 is constant, the gas charging and discharging device 30 can be used for inflating gas into the medium replacement portion 30 to increase the pressure intensity in the medium replacement portion 30, thereby causing the liquid in the medium replacement portion 30 to flow out, and further raises the liquid level in the cooking cavity 101. When the liquid level in the cooking cavity 101 is required to be lowered, the gas charging and discharging device can be used to extract gas from the medium replacement portion 30, so that the pressure intensity in the medium replacement portion 30 is lowered, and the liquid in the cooking cavity 101 enters the medium replacement portion 30 under the action of the negative pressure, so that the effect of lowering the liquid level can be achieved. When the internal volume of the medium replacement portion 30 is variable, the gas in the medium replacement portion 30 is inflated or extracted by the gas charging and discharging device, and the liquid level in the cooking cavity 101 can rise and drop.

Taking boiled tea as an example, in the related art, the liquid level in the teapot is not variable. If the tea in the upper part is to be soaked, enough water needs to be added, which leads to a large amount of water consumption, and the tea leaves is soaked for a long time, resulting in a worse taste of the tea. When the tea is brewed through the health care pot 100, the tea leaves can be placed in the containing portion 20, and the water is stored in the cooking cavity 101. When the liquid level in the cooking cavity 101 rises above the lowest water entry point of the communication area 201, the water enters the containing portion 20 through the communication area 201 provided in the peripheral wall of the containing portion 20 to effect tea dripping from the outside to the inside. That is to say, the health care pot 100 of the present disclosure does not need to add too much water to boil tea, and the tea can be brought into contact with water by increasing the liquid level when a small amount of water is added, so that not only the amount of water can be reduced, but also the contact time is controllable, and different concentrations of tea can be obtained to meet the different needs of users. In addition, the water has a larger shower area for the tea leaves, and the amount of shower is larger, which is conducive to improving the uniformity and sufficiency of the tea, and is beneficial to improve the taste of the tea.

In addition, in the present disclosure, the communication area 201 is provided in the peripheral wall of the containing portion 20, that is, the liquid in the cooking cavity 101 can be introduced into the containing portion 20 from the periphery of the containing portion 20 to shower the foodstuff 200 in the containing portion 20 from the outside to the inside in the radial direction of the containing portion 20, and the shower area is larger, which is advantageous for increasing the amount of showering, making the shower more sufficient, and improving the uniformity of contact between the foodstuff 200 and the liquid, avoiding the situation where some of the foodstuff 200 are difficult to contact with water and cannot be cooked normally.

In addition, if water is introduced from the middle portion of the containing portion 20, a thin tube needs to be provided in the middle portion of the containing portion 20 to achieve water inflow, and the thin tube is very difficult to clean, and the water discharge area of the thin tube is small, and the flow of water is small, and it is unbeneficial to improve the showering effect and the showering efficiency of the foodstuff 200. In the present disclosure, the communication area 201 is disposed in the peripheral wall of the containing portion 20, and the thin tube structure is not required, which effectively reduces the difficulty of cleaning, and is more convenient for the user to use, and the liquid flow amount of the communication area 201 can be set according to actual conditions, and the liquid discharge area can be larger to improve the efficiency of the shower.

It should be noted that the lower level of the liquid in the cooking cavity 101 shown in Fig. 3 and the higher level of the liquid in the cooking cavity 101 shown in Fig. 4 are for illustrative purposes only, in other embodiments, the lower level of the liquid in the cooking cavity 101 may be suitably higher or lower than the position shown in Fig. 3, and the higher level may be appropriately higher or lower than the position shown in Fig. 4, and only needs to satisfy the requirement that when the liquid level in the cooking cavity 101 is at the lower level, the liquid level is lower than the lowest water entry point of the communication area 201, and when the liquid level in the cooking cavity 101 is at the higher level, the liquid level is higher than the lowest water entry point of the communication area 201.

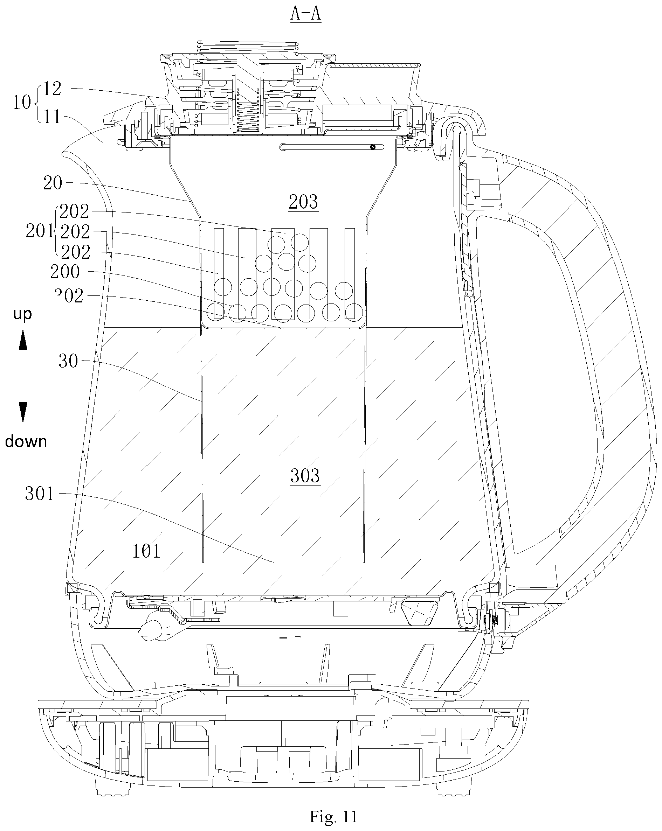

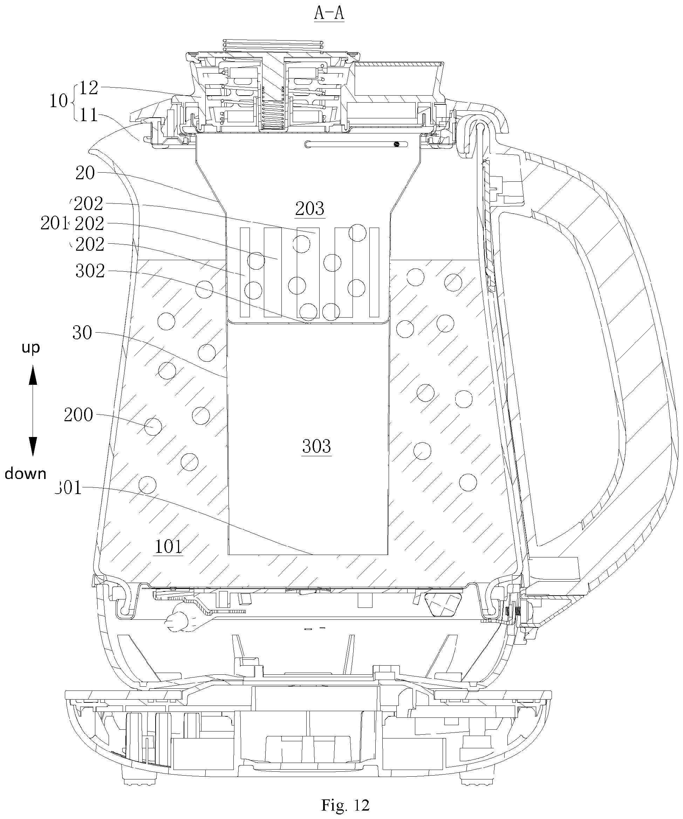

In addition, it should be noted that when the liquid in the cooking cavity 101 is at the lower level, the second medium in the medium replacement portion 30 may completely fill the medium replacement portion 30 as shown in Figs. 3 and 11 or partially fill the medium replacement portion 30. When the liquid in the cooking cavity 101 is at the higher level, the second medium in the medium replacement portion 30 may be completely or partially discharged from the medium replacement portion 30 as shown in Figs. 4 and 12.

In the health care pot 100 according to the embodiments of the present disclosure, the liquid level in the cooking cavity 101 can be changed by the medium replacement portion 30, and the containing portion 20 cannot be entered when the liquid level is low, which can prevent the foodstuff 200 from being soaked for a long time and affecting the taste or deterioration, and is healthier and hygienic. When the liquid level is higher than the lowest water entry point of the communication area 201, the liquid can enter the containing portion 20 from the peripheral wall of the containing portion, so that the foodstuff 200 is showered from the outside to the inside, the shower area is larger, the shower amount is large, and the shower is more sufficient. It is beneficial to reduce the amount of water consumption, and at the same time obtain a better taste of the foodstuff or tea and other liquids, the containing portion 20 is easier to clean, which is conducive to improve the user experience.

According to some embodiments of the present disclosure, as illustrated in Figs. 3, 4, 6 and 7, the communication area 201 is configured to have at least one through hole 202, and a lowest point of the at least one through hole 202 is higher than the lower level and lower than the higher level. Thereby, the liquid in the cooking cavity 101 can enter the containing portion 20 from the at least one through hole 202. The structure of the communicating area 201 is simple, easy to process, and the cleaning is more convenient.

Further, still referring to Figs. 3, 4, 6 and 7, a plurality of through holes 202 is provided, at least two through holes 202 are spaced apart in a circumferential direction of the containing portion 20, and a lowest point of the at least two through holes 202 spaced apart in the circumferential direction of the containing portion 20 is higher than the lower level and lower than the higher level separately. Thereby, the liquid in the cooking cavity 101 can shower the foodstuff 200 in the containing portion 20 from a larger extent in the circumferential direction of the containing portion 20 to further increase the shower area and the amount of shower.

Optionally, as illustrated in Figs. 3, 4, 6 and 7, a plurality of through holes 202 is provided, at least two through holes 202 are spaced apart in an axial direction of the containing portion 20, and a lowest point of the at least two through holes 202 spaced apart in the axial direction of the containing portion 20 is higher than the lower level and lower than the higher level separately. Thereby, the liquid in the cooking cavity 101 can shower the foodstuff 200 in the containing portion 20 from a larger extent in the axial direction of the containing portion 20 to further increase the shower area and the amount of shower, especially when the height of the foodstuff 200 in the containing portion 20 is higher, it is advantageous to achieve spraying on the upper foodstuff 200.

Optionally, as illustrated in Figs. 3 and 4, a highest point of at least one through hole 202 is higher than the higher level to ensure the balance of the air pressure in the containing portion 20, preventing the air pressure in the containing portion 20 from increasing to affect the continuous liquid feeding during the liquid entering the containing portion 20.

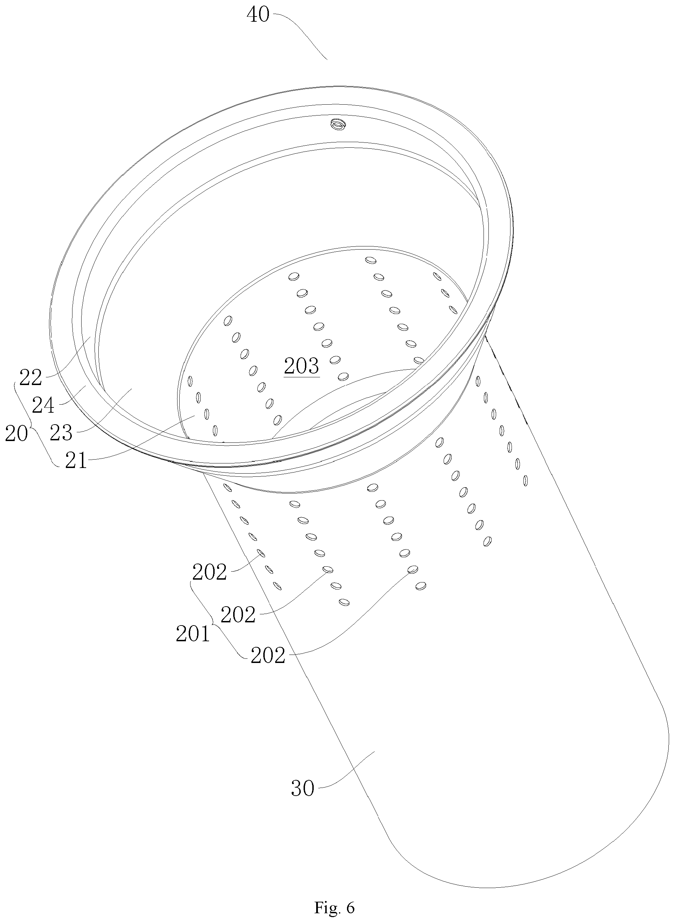

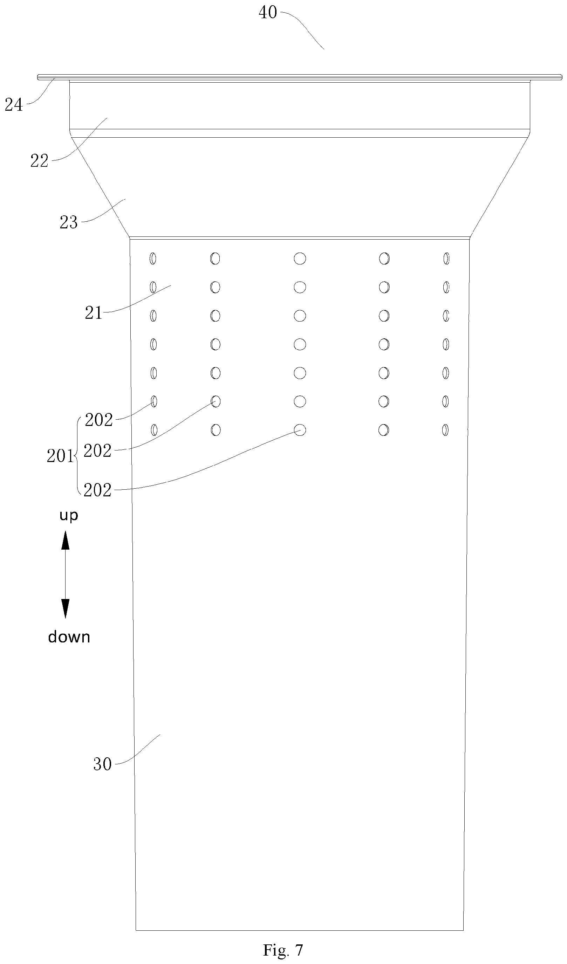

According to some embodiments of the present disclosure, as illustrated in Figs. 6 and 7, a plurality of through holes 202 is defined in the communication area 201, and the plurality of through holes 202 is arranged into an array along a first direction and a second direction, and the first direction intersects with the second direction. Thereby, the foodstuff 200 can be showered in a larger range in the first direction and the second direction, which is advantageous for improving the shower amount and the shower uniformity, and the structure of the containing portion 20 is more beautiful and easy to process.

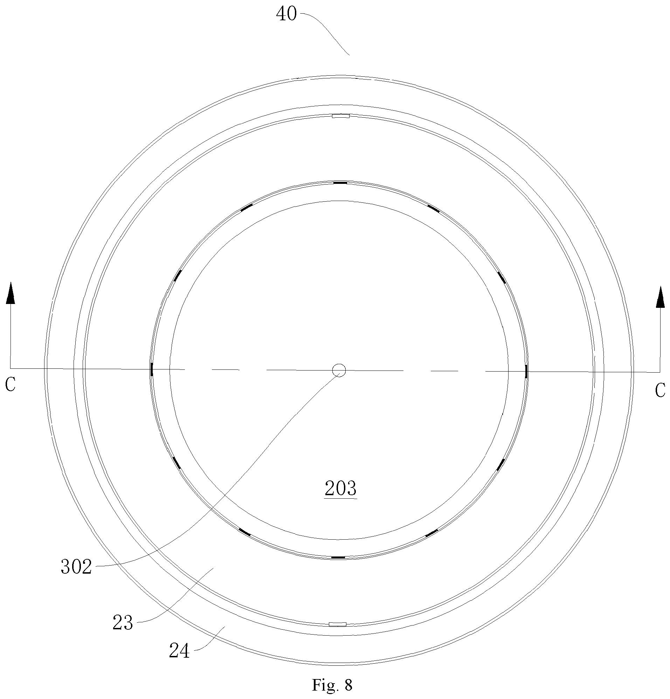

The present disclosure does not impose any special limitation on the first direction and the second direction, optionally, the first direction is an axial direction of the containing portion 20, and the second direction is a circumferential direction of the containing portion 20. For example, in some embodiments, as shown in Figs. 6-9, the radial section of the containing portion 20 is circular, and the plurality of through holes 202 is distributed in a circle along the circumferential direction of the containing portion 20 at interval, and a plurality of circles of the through holes are provided in the axial direction of the containing portion 20.

Optionally, the through hole 202 can be a circular hole, and a diameter D of the circular hole satisfies: 1mm≤D≤8mm. For example, in some embodiments, the diameter D of the circular holes can be 2 mm, 3 mm, 4 mm, 5 mm, 6 mm, and 7 mm, respectively. In the above diameter range, the area of the circular hole is large enough to reduce the resistance of the liquid passing through the circular hole, improve the smoothness of the liquid entering the containing portion 20, prevent the foodstuff 200 from clogging the circular hole, and the area of the circular hole is not excessively large to cause the foodstuff 200 in the containing portion 20 to overflow. Moreover, the circular hole has a simple structure, is easy to process, has no dead angle, and is easy to clean.

According to some embodiments of the present disclosure, as illustrated in Figs. 6 to 9, a cross section of at least a lower part of the peripheral wall of the containing portion 20 is formed to be circular, and the circular structure is less likely to be deformed, the structure of the containing portion 20 is more stable, and it is advantageous to reduce the sanitary dead angle and prevent the foodstuff 200 from remaining in the containing portion 20, so that it is easier to clean the containing portion 20. In addition, the communication area 201 is at least disposed to the lower part of the peripheral wall of the containing portion 20, so that the liquid entering the containing portion 20 from the communication area 201 can directly shower the foodstuff 200 located at the lower portion of the containing portion 20, thereby improving the shower effect..

Optionally, at least the lower part of the peripheral wall of the containing portion 20 is cylindrical and has an inner diameter of 20mm-120mm, preferably 60mm. For example, in some embodiments, the inner diameter of the cylindrical shape is 20mm, 40mm, 60 mm, 80mm, 100mm, and 120mm. Preferably, the inner diameter of the cylindrical shape is 60mm. The feeding of the foodstuff 200 in the containing portion 20 is easier and easy to operate, and the amount of the foodstuff 200 in the containing portion 20 is more in line with the usage habits of most users, and the containing portion 20 has a small occupied space and a more beautiful appearance, and is conveniently placed in the cooking cavity 101.

The specific structure of the containing portion 20 according to some embodiments of the present disclosure will be described below with reference to the accompanying drawings.

As illustrated in Figs. 6 to 9, the peripheral wall of the containing portion 20 can comprise: a first cylindrical section 21, a second cylindrical section 22, and a diameter variable connecting section 23. The communication area 201 is provided in the first cylindrical section 21, wherein the second cylindrical section 22 is coaxially disposed above the first cylindrical section 21 and an inner diameter of the second cylindrical section 22 is greater than an inner diameter of the first cylindrical section 21, and an upper opening of the second cylindrical section 22 forms into a placing opening, wherein a lower edge of the diameter variable connecting section 23 is connected to an upper edge of the first cylindrical section 21, and an upper edge of the diameter variable connecting section 23 is connected to a lower edge of the second cylindrical section 22, and the diameter variable connecting section 23 extends obliquely upwards and outwards relative to an axial direction of the first cylindrical section 21. Here, "outwards" is a direction away from the axis of the first cylindrical section 21.

Thereby, the opening area of the placing opening is large, which is convenient for the user to pick up and place the foodstuff 200, and is convenient for cleaning the containing portion 20. The radial dimension of the first cylindrical section 21 is small, so that the containing portion 20 is placed in the cooking cavity 101 conveniently, and the structure is more stable, and is not easily deformed. By connecting the first cylindrical section 21 and the second cylindrical section 22 by the diameter variable connecting section 23, the sanitary corner of the containing portion 20 can be reduced, and the containing portion 20 can be cleaned more cleanly.

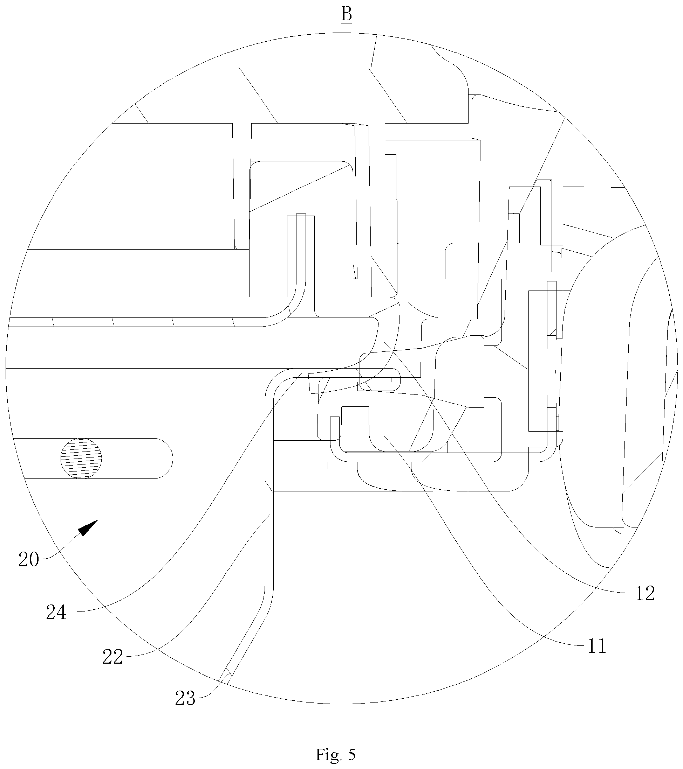

According to the present invention, as illustrated in Figs. 5 to 9, an upper edge of the containing portion 20 is provided with a snap-fit flange 24, the snap-fit flange 24 extend outwards, and the snap-fit flange 24 can be snap-fitted with the body portion 10, so as to fix the containing portion 20, and make the assembly and disassembly of the containing portion 20 more easier.

Further, as illustrated in Figs. 4 and 5, the body portion 10 can comprise a pot body portion 11 and an upper cover portion 12, and the snap-fit flange 24 is snap-fitted with the pot body portion 11 or the upper cover portion 12, which all fall in the scope of the present disclosure. For example, in the particular embodiments illustrated in Figs. 4 and 5, the snap-fit flange 24 are snap-fitted with the pot body portion 11, and the upper cover portion 12 abuts an upper surface of the snap-fit flange 24 to cover the placing opening of the containing portion 20 and further fix and limit the containing portion 20, and the containing portion 20 is fixed more stably and reliably.

According to the present invention, the medium replacement portion 30 is connected to the containing portion 20. A lower part of the medium replacement portion 30 is supported on the body portion 10 or in the body portion 10 by means of a supporting bracket. In this way, the containing portion 20 and the medium replacement portion 30 form an integral structure, and the containing portion 20 and the medium replacement portion 30 can be put into and taken out of the cooking cavity 101 together, which is more convenient to pick and place, and facilitates cleaning of the medium replacement portion 30, and thus can improve user satisfaction.

Optionally, in some other embodiments, the containing portion 20 is snap-fitted with the body portion 10 through the snap-fit flange 24, and a lower part of the medium replacement portion 30 is supported on the body portion 10 or in the body portion 10 by means of the supporting bracket, which also fall in the protection scope of the present disclosure.

According to some embodiments of the present disclosure, as illustrated in Figs. 3, and 4, the body portion 10 comprises a pot body portion 11 and an upper cover portion 12, the containing portion 20 extends into the pot body portion 11, the medium replacement portion 30 is disposed inside the pot body portion 11. Optionally, as illustrated in Figs. 6 to 9, a peripheral wall of the medium replacement portion 30 and the peripheral wall of the containing portion 20 merge together, and the containing portion 20 and the medium replacement portion 30 do not need to be assembled, and the connection is firm and difficult to loosen, the structure is simple, the manufacturing cost is low, and the manufacturing property is high, and it is conducive to improving production efficiency. Optionally, the medium replacement portion 30 and the containing portion 20 may also be separate pieces, and the medium replacement portion 30 and the containing portion 20 may be connected by snap-fitting, welded or riveted, and the connecting structure is simple and firm, which is advantageous for simplifying the connection structure among the medium replacement portion 30, the containing portion 20 and the body portion 10.

Optionally, in the present disclosure, the containing portion 20 can be a metal piece or a glass piece, and the medium replacement portion 30 can be the metal piece or the glass piece. The material of the containing portion 20 and the medium replacement portion 30 may be the same or different. The metal piece and the glass piece are firm in structure, are not easily deformed, and are non-toxic and harmless, easy to clean, and good for health.

According to some embodiments of the present disclosure, as illustrated in Figs. 6 to 9, a cross section of the medium replacement portion 30 is formed to be circular, the circular structure is less likely to be deformed, the structure of the medium replacement portion 30 is more stable, and it is advantageous to reduce the sanitary dead angle, and the medium replacement portion 30 is easier to clean.

In addition, The lower portion of the medium replacement portion 30 may be provided with an medium outlet 301 for discharging the second medium to increase a space in the medium replacement portion 30 that can accommodate the first medium and the second medium, thereby allowing the liquid level in the cooking cavity 101 to rise in a larger extend, so as to meet more usage needs.

It should be noted that the medium outlet 301 may be opened at the lower end of the medium replacement portion 30 as shown in Figs. 3, 4, and 9. In other embodiments, the medium outlet 301 may be provided at a lower portion of the peripheral wall of the medium replacement portion 30, for example a notch or a through hole provided in the lower portion of the peripheral wall of the medium replacement portion 30, as long as the requirement that the second medium can be discharged through the medium outlet 301 may be satisfied.

According to some embodiments of the present disclosure, the medium replacement portion 30 is configured to be able to replace the second medium in the liquid state with the first medium at a preset time so that the health care pot 100 has a reserved cooking function, and the user can add the food 200 and the liquid to the health care pot 100 in advance when the user needs to reserve cooking. In addition, the foodstuff 200 is separated from the liquid, preventing the foodstuff 200 from being soaked in the liquid for a long time to affect the taste of the foodstuff 200. Alternatively, the set time can be selected to be changed or fixed to meet the different reservation cooking needs of the user.

According to some further embodiments of the present disclosure, as illustrated in Figs. 11 and 12, the communication area 201 is configured in such a way that foodstuff 200 in the containing portion 20 is allowed to enter the cooking cavity 101 through the communication area 201 under an action of liquid entering the containing portion 20. That is, when the liquid in the cooking cavity 101 enters the containing portion 20 as shown in Fig. 12, the liquid impacts the foodstuff 200 so that the liquid can enter the cooking cavity 101 through the communication area 201. Thereby, the foodstuff 200 can be sufficiently mixed with the liquid in the cooking cavity 101 to improve the uniformity of cooking of the foodstuff 200. For example, in the process of porridge, the rice and water are more evenly mixed, and the rice and water of the porridge obtained by cooking is less likely to be separated, and the taste is better. Or in the process of the soup, the foodstuff 200 can continue to be immersed in the soup in the cooking cavity 101 after entering the cooking cavity 101, which is beneficial to increase the precipitation of nutrients in the foodstuff 200 and improve the nutritional value of the soup.

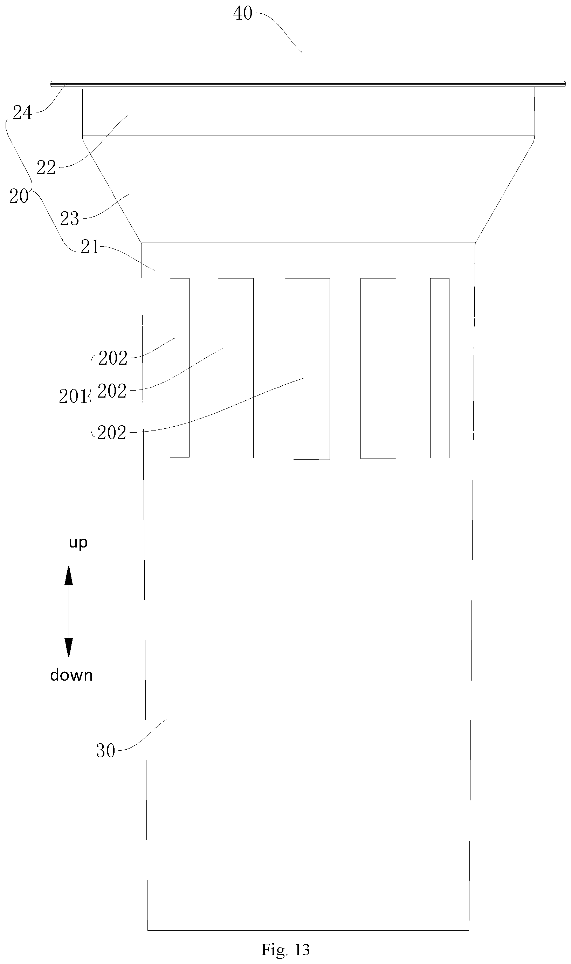

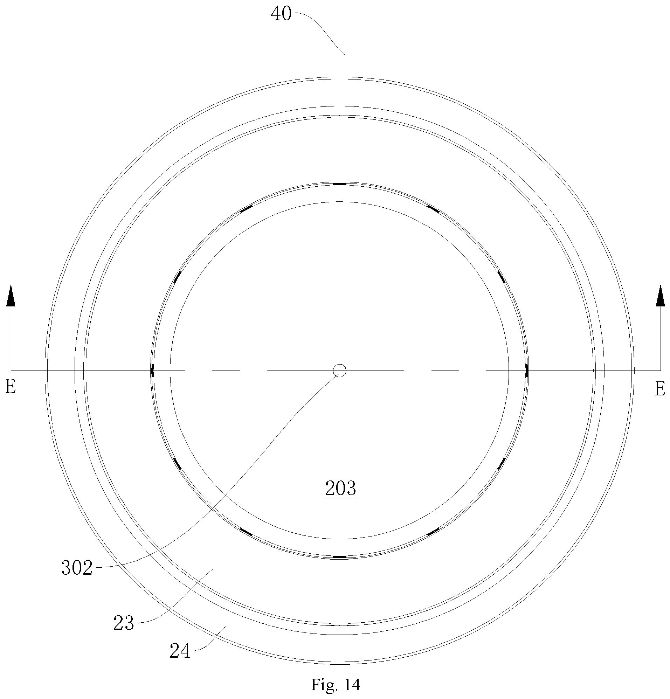

Optionally, as illustrated in Figs. 13 to 15, a plurality of elongated through holes 202 is defined in the communication area 201. The through hole 202 has a simple structure and a large flow area, which can allow most kinds of foodstuffs 200 to pass through the through hole 202 into the cooking cavity 101, and is advantageous for ensuring structural reliability of the containing portion 20.

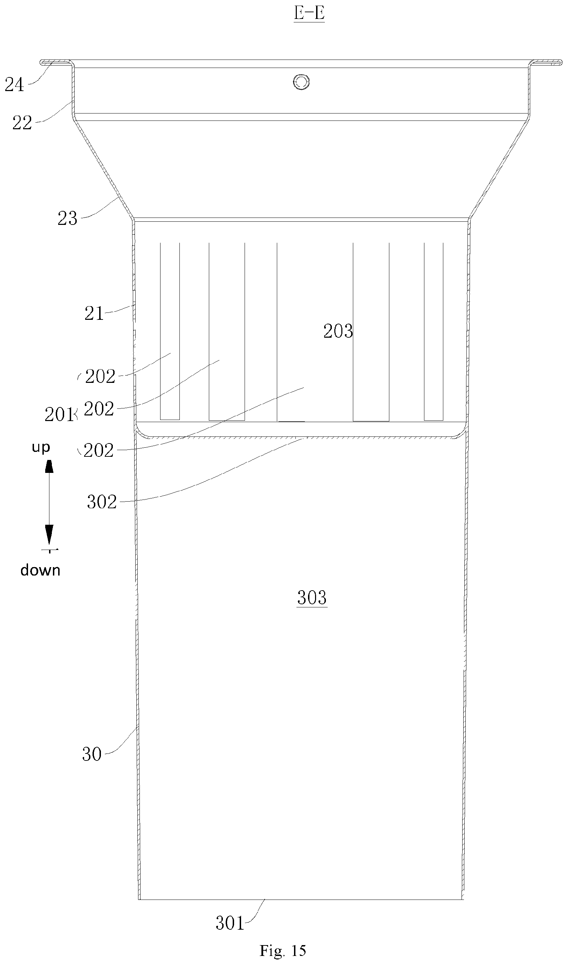

Furthermore, as illustrated in Figs. 13 and 15, the plurality of through holes 202 is spaced apart along a circumferential direction of the containing portion 20, and a length direction of each of the through hole 202 extends along an axial direction of the containing portion 20, which is advantageous for further reducing the effect of the large area of the through hole 202 on the structural reliability of the containing portion 20, and the containing portion 20 is more evenly stressed and is not easily damaged by uneven force.

Optionally, in some embodiments, the medium replacement portion 30 is configured as a gas-liquid replacement portion, and the gas-liquid replacement portion is configured to replace the second medium in the liquid state with the first medium in a gas state. The gaseous first medium is highly controllable and is not easily fused with the liquid second medium, and is not easily adversely affected by the liquid in the cooking cavity 101.

Optionally, the heath care pot 100 is provided with a controllable heating member therein, and the heating member is suitable to heat liquid to produce steam to form the first medium. Whether the first medium is generated can be controlled by heating or not heating by the heating member, thereby controlling whether the liquid level in the cooking cavity 101 rises, and the control of the health care pot 100 is simpler. Alternatively, the heating member may be used not only to form the first medium, may also be used to form both the first medium and for the cooking to reduce the number of parts of the health care pot 100, and the structure is simpler.

Optionally, in some embodiments, the amount of the first medium may also be controlled by controlling the heating power or the heating temperature of the heating member. When the amount of the first medium is increased, the first medium replaces the second medium in the medium replacement portion 30, so that the liquid level in the cooking cavity 101 rises, and when the amount of the first medium decreases, the liquid in the cooking cavity 101 can enter the medium replacement portion 30 to lower the liquid level in the cooking cavity 101. Thereby, the liquid level in the cooking cavity 101 is repeatedly raised and lowered to improve the mixing uniformity of the liquid and the foodstuff 200, and the cooking effect of the foodstuff 200 is improved. In the embodiment in which the foodstuff 200 enters the cooking cavity 101, the foodstuff 200 can also be prevented from sinking into the bottom of the cooking cavity 101 to cause scorching of the bottom.

It should be noted that the present disclosure does not particularly limit the structure and arrangement position of the heating member. For example, in the specific embodiment shown in Figs. 1-4, the health care pot 100 includes the pot body portion 11 and the upper cover portion 12. The pot body portion 11 includes a pot body and a base. The heating member may be disposed in the base, or may be disposed in the pot body, or may be disposed in the upper cover portion 12, which are all within the protection scope of the present disclosure.

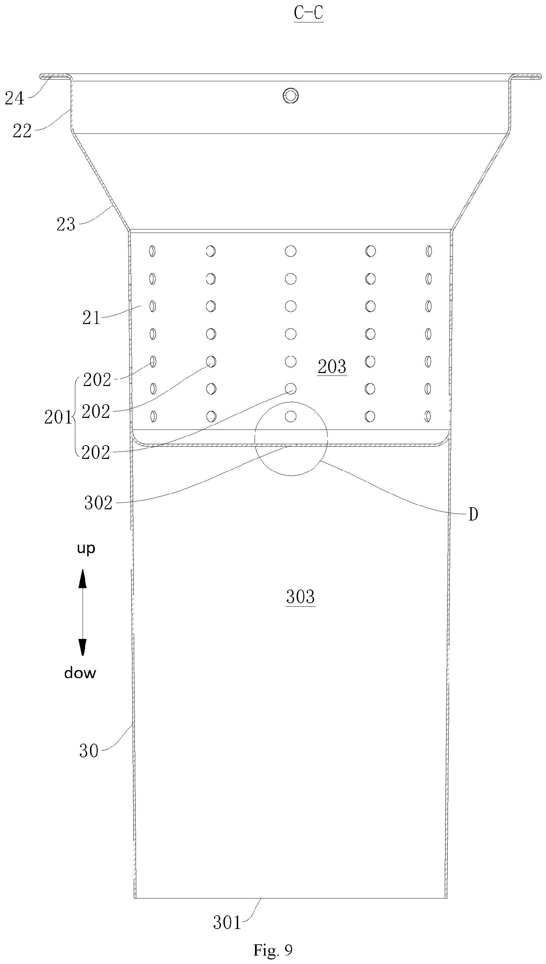

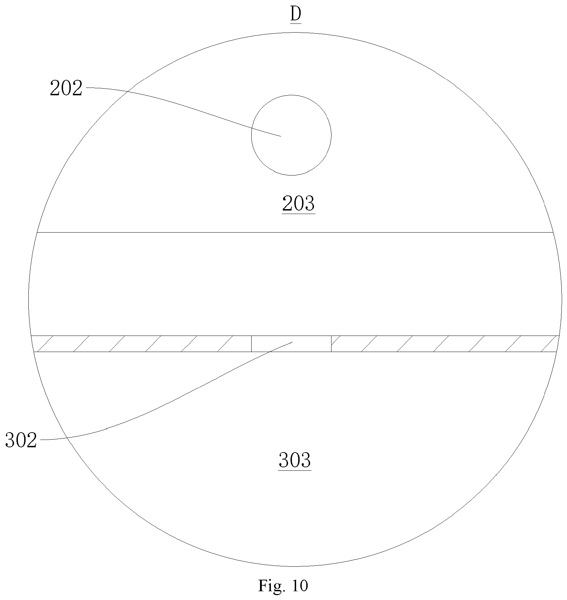

According to some embodiments of the present disclosure, as illustrated in Figs. 9, 10 and 15, the medium replacement portion 30 is connected to a lower part of the containing portion 20, and a bottom wall of the containing portion 20 is provided with a micro gas vent 302 communicating the containing portion 20 and the medium replacement portion 30 so as to discharge gas. In other words, when the amount of the first medium in the medium replacement portion 30 is too large and the air pressure in the medium replacement portion 30 is excessively large, which not only reduces the air pressure in the medium replacement portion 30, prevents the occurrence of a safety accident, but also the foodstuff 200 in the containing portion 20 can be impacted to prevent the foodstuff 200 from being excessively packed and affecting the sufficient contact with the liquid.

It should be noted that since the opening area of the micro gas vent 302 is small, when the heating member operates to form the gaseous first medium, the first medium cannot be discharged from the micro gas vent 302 in time, so that the first medium can be accumulated in the first medium, the air pressure increases, and the liquid second medium in the medium replacement portion 30 is discharged.

Optionally, in the embodiment in which the amount of the first medium in the medium replacement portion 30 is decreased to lower the liquid level in the cooking cavity 101, the liquid in the containing portion 20 can also be discharged out of the containing portion 20 through the micro gas vent 302, so as to be returned to the cooking cavity 101 through the medium replacement portion 30. Of course, the liquid in the containing portion 20 can also be discharged through other structures, for example, the back-flow can be realized through the communication area 201 or the return hole or the like.

As illustrated in Figs. 3, 4, 11 and 12, a health care pot 100 according to embodiments of a second aspect of the present disclosure can include a body portion 10 and a containing basket 40. The body portion 10 defines a cooking cavity 101 therein and provided with a predetermined liquid level line. The containing basket 40 is connected to the body portion 10 and extends into the cooking cavity 101, wherein the containing basket 40 is provided with a containing cavity 203 and a medium replacement cavity 303 located below the containing cavity. It can be understood that the containing basket 40 herein can be integrally formed by the containing portion 20 of the health care pot 100 and the medium replacement portion 30 according to the embodiment of the first aspect of the present disclosure.
wherein the containing basket 40 is configured to replace a second medium in a liquid state located in the medium replacement cavity 303 with a first medium in a gas state so that the replaced second medium is allowed to be discharged out of the medium replacement cavity 303, so that the liquid level in the cooking cavity 101 can rise. The containing basket is further configured to enable the second medium located outside the medium replacement cavity 303 and in the liquid state to enter the medium replacement cavity 303 so as to occupy at least a part of space occupied by the first medium to enable a liquid level in the cooking cavity to drop. A communication area 201 communicating the containing cavity 203 and the cooking cavity 101 is provided in a peripheral wall of the containing basket 40, and a lowest water entry point of the communication area 201 is higher than the predetermined liquid level and the liquid level of the cooking cavity 101 is able to rise to the lowest water entry point..

When the user adds the foodstuff 200 and the liquid, the foodstuff 200 can be placed in the containing cavity 203 of the containing basket 40, the liquid is added into the cooking cavity 101 and the liquid level is controlled to be at a predetermined liquid level, so that the liquid cannot enter the liquid, the separation of the foodstuff 200 from the liquid is achieved. When the first medium replaces the second medium in the medium replacement cavity 303, the liquid level in the cooking cavity 101 rises to a minimum inflow point or above a minimum inflow point, so that the liquid can shower the foodstuff inwardly from the peripheral wall of the containing cavity 203 so as to be in full contact with the foodstuff 200, which is advantageous for increasing the shower area and shower uniformity of the foodstuff 200, and is advantageous for achieving reserved cooking. When the second medium replaces the first medium in the medium replacement cavity 303, the liquid level in the cooking cavity 101 drops, for example, below the lowest water entry point, so that the liquid in the containing cavity 203 can flow back to the cooking cavity 101 through the communication area 201 and realize separation from the foodstuff 200. In addition, the containing basket 40 does not need to be provided with a thin tube structure located in the middle of the containing cavity 203, so that the containing basket 40 has fewer sanitary corners and is easier to clean.

In the health care pot 100 according to the embodiments of the second aspect of the present disclosure, the liquid level in the cooking cavity 101 can rise from the position lower than the lowest water entry point to the position of the lowest water entry point by the medium replacement cavity 303, and the containing cavity 203 cannot be entered when the liquid level is lower than the lowest eater entry point, which can prevent the foodstuff from being soaked for a long time and affecting the taste or deterioration, and is healthier and hygienic. When the liquid level rises to the lowest water entry point, the liquid can enter the containing cavity 203 from the peripheral wall of the containing cavity 203, so that the foodstuff 200 is showered from the outside to the inside, the shower area is larger, the shower amount is large, and the shower is more sufficient. The containing cavity 203 is easier to clean, which is conducive to improve the user experience.

Other configurations and operations of the health care pot 100 in accordance with embodiments of the present disclosure are known to those of ordinary skill in the art and will not be described in detail herein.

In the present disclosure, unless specified or limited otherwise, it should be noted that, terms "mounted," "connected," "fixed" and "coupled" may be understood broadly, such as permanent connection or detachable connection, or integration; mechanical connection, electronic connection or connection with communication therebetween; direct connection or indirect connection via intermediary, inner communication or interaction between two elements. These having ordinary skills in the art should understand the specific meanings in the present disclosure according to specific situations.

In the description of the present specification, the description with reference to the terms "one embodiment", "some embodiments", "example", "specific example", or "some examples" and the like means a specific feature, structure, material or characteristic described in connection with the embodiment or example is included in at least one embodiment or example of the disclosure. In the present specification, the schematic representation of the above terms is not necessarily directed to the same embodiment or example. Furthermore, the particular features, structures, materials, or characteristics described may be combined in a suitable manner in any one or more embodiments or examples. Further, various embodiments or examples described in this specification can be j oined and combined by those skilled in the art.

Although the embodiments of the present disclosure have been shown and described, it is understood that the above-described embodiments are illustrative and are not to be construed as limiting the scope of the disclosure. Variations, modifications, alterations and variations of the above-described embodiments may be made by those skilled in the art within the scope of the disclosure. The scope of the disclosure is defined by the claims.

## Claims

1. A health care pot (100), comprising:
a body portion (10) defining a cooking cavity (101) therein;
a containing portion (20) extending into the cooking cavity (101);
a communication area (201) communicating the containing portion (20) and the cooking cavity (101) is provided in a peripheral wall of the containing portion (20),
a medium replacement portion (30) provided in the cooking cavity (101), wherein the medium replacement portion (30) is connected to the containing portion (20),
and wherein that the medium replacement portion (30) is configured to replace a second medium in a liquid state located in the medium replacement portion (30) with a first medium so that the replaced second medium is allowed to be discharged out of the medium replacement portion (30) to enable a liquid level in the cooking cavity (101) to rise from a lower level to a higher level, the medium replacement portion (30) is further configured to enable the second medium in the liquid state located outside the medium replacement portion (30) to enter the medium replacement portion (30) so as to occupy at least a part of space occupied by the first medium, and a lowest water entry point of the communication area (201) is higher than the lower level and lower than the higher lever;
**characterized in that** an upper edge of the containing portion (20) is provided with a snap-fit flange (24), and the snap-fit flange (24) is snap-fitted with the body portion (10).

2. The health care pot according to claim 1, wherein the communication area (201) is configured to have at least one through hole (202), and a lowest point of the at least one through hole (202) is higher than the lower level and lower than the higher level.

3. The health care pot according to claim 1 or 2, wherein a plurality of through holes (202) are provided, at least two through holes are spaced apart in a circumferential direction of the containing portion (20), and a lowest point of each of the at least two through holes (202) spaced apart in the circumferential direction is higher than the lower level and lower than the higher level respectively;
and/or,
wherein a plurality of through holes (202) is provided, at least two through holes are spaced apart in an axial direction of the containing portion (20), and a lowest point of each of the at least two through holes (202) spaced apart in the axial direction is higher than the lower level and lower than the higher level respectively.

4. The health care pot according to any one of claims 1 to 3, wherein a highest point of at least one through hole (202) is higher than the higher level;
and/or,
wherein a plurality of through holes (202) are provided in the communication area (201), and the plurality of through holes (202) are arranged into an array along a first direction and a second direction, and the first direction intersects with the second direction, wherein the first direction is preferably an axial direction of the containing portion (20), and the second direction is preferably a circumferential direction of the containing portion (20).

5. The health care pot according to any one of claims 1 to 4, wherein the through hole (202) is a circular hole, and a diameter D of the circular hole satisfies: 1mm≤D≤8mm.

6. The health care pot according to any one of claims 1 to 5, wherein a cross section of at least a lower part of the peripheral wall of the containing portion (20) is formed to be circular and the communication area (201) is at least disposed at the lower part of the peripheral wall of the containing portion, wherein at least the lower part of the peripheral wall of the containing portion is preferably cylindrical and preferably has an inner diameter of 20 mm to 120 mm, further preferably 60 mm.

7. The health care pot according to any one of claims 1 to 6, wherein the peripheral wall of the containing portion (20) comprises:
a first cylindrical section (21) the communication area (201) being provided in the first cylindrical section (21);
a second cylindrical section (22), wherein the second cylindrical section (22) is coaxially disposed above the first cylindrical section (21) and an inner diameter of the second cylindrical section (22) is greater than an inner diameter of the first cylindrical section (21) and an upper opening of the second cylindrical section (22) forms a placing opening;
a diameter variable connecting section (23), wherein a lower edge of the diameter variable connecting section (23) is connected to an upper edge of the first cylindrical section (21), and an upper edge of the diameter variable connecting section (23) is connected to a lower edge of the second cylindrical section (22), and the diameter variable connecting section (23) extends obliquely upwards and outwards relative to an axial direction of the first cylindrical section (21).

8. The health care pot according to any one of claims 1 to 7,
wherein the body portion (10) comprises a pot body portion (11) and an upper cover portion (12), and the snap-fit flange (24) is snap-fitted with the pot body portion (11) or with the upper cover portion (12).

9. The health care pot according to any one of claims 1 to 8, wherein a lower part of the medium replacement portion (30) is supported on the body portion (10) or is supported by means of a supporting bracket in the body portion (10);
and/or,
wherein the body portion (10) comprises a pot body portion (11) and an upper cover portion (12), the containing portion (20) extends into the pot body portion (11), the medium replacement portion (30) is disposed inside the pot body portion (11);
a peripheral wall of the medium replacement portion (30) and the peripheral wall of the containing portion (20) merge together, or the medium replacement portion (30) and the containing portion (20) are connected by snap-fitting, welding, or riveting.

10. The health care pot according to any one of claims 1 to 9, wherein the containing portion (20) is a metal piece or a glass piece, and the medium replacement portion (30) is a metal piece or a glass piece;
and/or,
wherein a cross section of the medium replacement portion (30) is formed to be circular, and a lower part of the medium replacement portion (30) is provided with a medium outlet (301) used for the second medium to be discharged.

11. The health care pot according to any one of claims 1 to 10, wherein the medium replacement portion (30) is configured to be able to replace the second medium in the liquid state with the first medium at a preset time, and the preset time is selectable to be variable or fixed;
and/or,
wherein the communication area (201) is configured in such a way that foodstuff (200) in the containing portion (20) is allowed to enter the cooking cavity (101) through the communication area (201) under an action of liquid entering the containing portion (20).

12. The health care pot according to any one of claims 1 to 11, wherein a plurality of elongated through holes (202) are provided in the communication area (201),
wherein the plurality of through holes (202) are preferably spaced apart along a circumferential direction of the containing portion (20), and a length direction of each of the through hole preferably extends along an axial direction of the containing portion (20).

13. The health care pot according to any one of claims 1 to 12, wherein the medium replacement portion (30) is configured as a gas-liquid replacement portion, and the gas-liquid replacement portion is configured to replace the second medium in the liquid state with the first medium in a gas state.

14. The health care pot according to any one of claims 1 to 13, wherein the heath care pot is provided with a controllable heating member therein, and the heating member is suitable to heat liquid to produce steam in order to form the first medium,
and/or,
wherein the medium replacement portion (30) is connected to a lower part of the containing portion (20), and a bottom wall of the containing portion (20) is provided with a micro gas vent (302) communicating the containing portion (20) and the medium replacement portion (30) so as to discharge gas.

## Patentansprüche

1. Gesundheits-Kessel (100), umfassend
einen Körperbereich (10), der einen Kochhohlraum (101) darin definiert;
einen Aufnahmebereich (20), der sich in den Kochhohlraum (101) erstreckt; eine den Aufnahmebereich (20) und den Kochhohlraum (101) miteinander verbindende Verbindungsregion (201) ist in einer Umfangswand des Aufnahmebereichs (20) vorgesehen,
einen Medienaustauschbereich (30), der in dem Kochhohlraum (101) vorgesehen ist, wobei der Medienaustauschbereich (30) mit dem Aufnahmebereich (20) verbunden ist,
und wobei
der Medienaustauschbereich (30) derart ausgebildet ist, dass er ein zweites Medium in einem flüssigen Zustand, das sich in dem Medienaustauschbereich (30) befindet, durch ein erstes Medium austauscht, so dass das ausgetauschte zweite Medium aus dem Medienaustauschbereich (30) abgegeben werden kann, um einen Flüssigkeitspegel in dem Kochhohlraum (101) von einem niedrigeren Pegel auf einen höheren Pegel ansteigen zu lassen, der Medienaustauschbereich (30) ferner so ausgebildet ist, dass er es dem zweiten Medium im flüssigen Zustand, das sich außerhalb des Medienaustauschbereichs (30) befindet, ermöglicht, in den Medienaustauschbereich (30) einzutreten, um zumindest einen Teil des vom ersten Medium belegten Raums einzunehmen, und ein unterster Wassereintrittspunkt der Verbindungsregion (201) höher als der niedrigere Pegel und niedriger als der höhere Pegel ist;
**dadurch gekennzeichnet, dass**
eine obere Kante des Aufnahmebereichs (20) mit einem Einrastflansch (24) versehen ist, und der Einrastflansch (24) mit dem Körperbereich (10) eingerastet ist.

2. Gesundheits-Kessel gemäß Anspruch 1, wobei die Verbindungsregion (201) so ausgebildet ist, dass sie mindestens ein Durchgangsloch (202) aufweist, und ein niedrigster Punkt des mindestens einen Durchgangslochs (202) höher als der untere Pegel und niedriger als der höhere Pegel ist.

3. Gesundheits-Kessel gemäß Anspruch 1 oder 2, wobei eine Vielzahl von Durchgangslöchern (202) vorgesehen ist, mindestens zwei Durchgangslöcher in einer Umfangsrichtung des Aufnahmebereichs (20) voneinander beabstandet sind und ein niedrigster Punkt jedes der mindestens zwei in der Umfangsrichtung beabstandeten Durchgangslöcher (202) höher als der untere Pegel bzw. niedriger als der höhere Pegel ist;
und/oder,
wobei eine Mehrzahl von Durchgangslöchern (202) vorgesehen ist, mindestens zwei Durchgangslöcher in einer axialen Richtung des Aufnahmebereichs (20) beabstandet sind und ein niedrigster Punkt jedes der mindestens zwei Durchgangslöcher (202), die in der axialen Richtung beabstandet sind, höher als der untere Pegel bzw. niedriger als der höhere Pegel ist.

4. Gesundheits-Kessel gemäß einem der Ansprüche 1 bis 3, wobei ein höchster Punkt mindestens eines Durchgangslochs (202) höher liegt als der höhere Pegel;
und/oder,
wobei eine Vielzahl von Durchgangslöchern (202) in der Verbindungsregion (201) vorgesehen ist und die Vielzahl von Durchgangslöchern (202) in einer Reihe entlang einer ersten Richtung und einer zweiten Richtung angeordnet ist und die erste Richtung sich mit der zweiten Richtung schneidet, wobei die erste Richtung vorzugsweise eine axiale Richtung des Aufnahmebereichs (20) ist und die zweite Richtung vorzugsweise eine Umfangsrichtung des Aufnahmebereichs (20) ist.

5. Gesundheits-Kessel gemäß einem der Ansprüche 1 bis 4, wobei das Durchgangsloch (202) ein kreisförmiges Loch ist und ein Durchmesser D des kreisförmigen Lochs Folgendes erfüllt: 1mm≤D≤8mm.

6. Gesundheits-Kessel gemäß einem der Ansprüche 1 bis 5, wobei ein Querschnitt zumindest eines unteres Teils der Umfangswand des Aufnahmebereichs (20) kreisförmig ausgebildet ist und die Verbindungsregion (201) zumindest am unteren Teil der Umfangswand des Aufnahmebereichs angeordnet ist, wobei zumindest der untere Teil der Umfangswand des Aufnahmebereichs vorzugsweise zylindrisch ist und vorzugsweise einen Innendurchmesser von 20 mm bis 120 mm, weiter vorzugsweise 60 mm, aufweist.

7. Gesundheits-Kessel gemäß einem der Ansprüche 1 bis 6, wobei die Umfangswand des Aufnahmebereichs (20) Folgendes umfasst
einen ersten zylindrischen Abschnitt (21), wobei die Verbindungsregion (201) in dem ersten zylindrischen Abschnitt (21) vorgesehen ist;
einen zweiten zylindrischen Abschnitt (22), wobei der zweite zylindrische Abschnitt (22) koaxial über dem ersten zylindrischen Abschnitt (21) angeordnet ist und ein Innendurchmesser des zweiten zylindrischen Abschnitts (22) größer ist als ein Innendurchmesser des ersten zylindrischen Abschnitts (22), und eine obere Öffnung des zweiten zylindrischen Abschnitts (22) eine Platzierungsöffnung ausbildet;
einen durchmesservariablen Verbindungsabschnitt (23), wobei eine untere Kante des durchmesservariablen Verbindungsabschnitts (23) mit einer oberen Kante des ersten zylindrischen Abschnitts (21) verbunden ist, und eine obere Kante des durchmesservariablen Verbindungsabschnitts (23) mit einer unteren Kante des zweiten zylindrischen Abschnitts (22) verbunden ist, und sich der durchmesservariable Verbindungsabschnitt (23) schräg nach oben und nach außen relativ zu einer axialen Richtung des ersten zylindrischen Abschnitts (21) erstreckt.

8. Gesundheits-Kessel gemäß einem der Ansprüche 1 bis 7,
wobei der Körperbereich (10) einen Kesselkörperbereich (11) und einen oberen Deckelbereich (12) umfasst und der Einrastflansch (24) mit dem Kesselkörperbereich (11) oder mit dem oberen Deckelbereich (12) verrastet ist.

9. Gesundheits-Kessel gemäß einem der Ansprüche 1 bis 8, wobei ein unterer Teil des Medienaustauschbereichs (30) auf dem Körperbereich (10) abgestützt ist oder mittels eines Stützbügels im Körperbereich (10) abgestützt ist;
und/oder,
wobei der Körperbereich (10) einen Kesselkörperbereich (11) und einen oberen Deckelbereich (12) umfasst, sich der Aufnahmebereich (20) in den Kesselkörperbereich (11) erstreckt, der Medienaustauschbereich (30) innerhalb des Kesselkörperbereichs (11) angeordnet ist;
eine Umfangswand des Medienaustauschbereichs (30) und die Umfangswand des Aufnahmebereichs (20) ineinander übergehen, oder der Medienaustauschbereich (30) und der Aufnahmebereich (20) durch Einrasten, Schweißen oder Nieten verbunden sind.

10. Gesundheits-Kessel gemäß einem der Ansprüche 1 bis 9, wobei der Aufnahmebereich (20) ein Metallstück oder ein Glasstück ist und der Medienaustauschbereich (30) ein Metallstück oder ein Glasstück ist;
und/oder,
wobei ein Querschnitt des Medienaustauschbereichs (30) kreisförmig ausgebildet ist und ein unterer Teil des Medienaustauschbereichs (30) mit einem Medienauslass (301) versehen ist, der für das zweite abzugebende Medium verwendet wird.

11. Gesundheits-Kessel gemäß einem der Ansprüche 1 bis 10, wobei der Medienaustauschbereich (30) so ausgebildet ist, dass er in der Lage ist, das zweite Medium im flüssigen Zustand mit dem ersten Medium zu einer voreingestellten Zeit auszutauschen, und die voreingestellte Zeit als variabel oder fest wählbar ist;
und/oder,
wobei die Verbindungsregion (201) so ausgebildet ist, dass Lebensmittel (200) in dem Aufnahmebereich (20) durch die Verbindungsregion (201) unter der Wirkung von Flüssigkeit, die in den Aufnahmebereich (20) eintritt, in den Kochhohlraum (101) eintreten können.

12. Gesundheits-Kessel gemäß einem der Ansprüche 1 bis 11, wobei eine Vielzahl von länglichen Durchgangslöchern (202) in der Verbindungsregion (201) vorgesehen ist,
wobei die Vielzahl von Durchgangslöchern (202) vorzugsweise entlang einer Umfangsrichtung des Aufnahmebereichs (20) voneinander beabstandet sind und eine Längsrichtung jedes der Durchgangslöcher sich vorzugsweise entlang einer axialen Richtung des Aufnahmebereichs (20) erstreckt.

13. Gesundheits-Kessel gemäß einem der Ansprüche 1 bis 12, wobei der Medienaustauschbereich (30) als Gas-Flüssigkeits-Austauschbereich ausgebildet ist und der Gas-Flüssigkeits-Austauschbereich so ausgebildet ist, dass er das zweite Medium im flüssigen Zustand durch das erste Medium in einem Gaszustand ersetzt.

14. Gesundheits-Kessel gemäß einem der Ansprüche 1 bis 13, wobei der Gesundheits-Kessel mit einem steuerbaren Heizelement versehen ist und das Heizelement geeignet ist, Flüssigkeit zu erhitzen, um Dampf zu erzeugen, um das erste Medium zu bilden,
und/oder,
wobei der Medienaustauschbereich (30) mit einem unteren Teil des Aufnahmebereichs (20) verbunden ist und eine Bodenwand des Aufnahmebereichs (20) mit einer Mikrogasentlüftung (302) versehen ist, die den Aufnahmebereich (20) und den Medienaustauschbereich (30) verbindet, um Gas abzugeben.

## Revendications

1. Pot de santé (100) comprenant :
une partie de corps (10) définissant une cavité de cuisson (101) dans celle-ci ;
une partie de réception (20) s'étendant dans la cavité de cuisson (101) ;
une zone de communication (201) faisant communiquer la partie de réception (20) et la cavité de cuisson (101) est disposée dans une paroi périphérique de la partie de réception (20),
une partie de remplacement de milieu (30) disposée dans la cavité de cuisson (101), la partie de remplacement de milieu (30) étant reliée à la partie de réception (20),
et dans lequel
la partie de remplacement de milieu (30) est configurée pour remplacer un deuxième milieu à l'état liquide situé dans la partie de remplacement de milieu (30) par un premier milieu, de telle façon que le deuxième milieu remplacé peut être déchargé hors de la partie de remplacement de milieu (30) pour permettre à un niveau de liquide dans la cavité de cuisson (101) de s'élever d'un niveau inférieur à un niveau supérieur, la partie de remplacement de milieu (30) est en outre configurée pour permettre au deuxième milieu à l'état liquide situé à l'extérieur de la partie de remplacement de milieu (30) d'entrer dans la partie de remplacement de milieu (30) de manière à occuper au moins une partie de l'espace occupé par le premier milieu, et un point d'entrée d'eau le plus bas de la zone de communication (201) est plus haut que le niveau inférieur et plus bas que le niveau supérieur;
**caractérisé en ce que**
un bord supérieur de la partie de réception (20) est doté d'un rebord d'encliquetage (24), et le rebord d'encliquetage (24) est encliqueté avec la partie de corps (10).

2. Pot de santé selon la revendication 1, dans lequel la zone de communication (201) est configurée pour avoir au moins un trou de passage (202), et un point le plus bas de l'au moins un trou de passage (202) est plus haut que le niveau inférieur et plus bas que le niveau supérieur.

3. Pot de santé selon la revendication 1 ou 2, dans lequel il est prévu une pluralité de trous de passage (202), au moins deux trous de passage sont espacés dans une direction circonférentielle de la partie de réception (20), et un point le plus bas de chacun parmi les au moins deux trous de passage (202) espacés dans la direction circonférentielle est plus haut que le niveau inférieur et plus bas que le niveau supérieur respectivement ;
et/ou
dans lequel il est prévu une pluralité de trous de passage (202), au moins deux trous de passage sont espacés dans une direction axiale de la partie de réception (20), et un point le plus bas de chacun parmi les au moins deux trous de passage (202) espacés dans la direction axiale est plus haut que le niveau inférieur et plus bas que le niveau supérieur respectivement.

4. Pot de santé selon l'une quelconque des revendications 1 à 3, dans lequel un point le plus haut d'au moins un trou de passage (202) est plus haut que le niveau supérieur;
et/ou
dans lequel il est prévu une pluralité de trous de passage (202) dans la zone de communication (201), et la pluralité de trous de passage (202) sont disposés en un réseau le long d'une première direction et d'une deuxième direction, et la première direction coupe la deuxième direction, la première direction étant de préférence une direction axiale de la partie de réception (20), et la deuxième direction étant de préférence une direction circonférentielle de la partie de réception (20).

5. Pot de santé selon l'une quelconque des revendications 1 à 4, dans lequel le trou de passage (202) est un trou circulaire, et un diamètre D du trou circulaire satisfait : 1mm≤D≤8mm.

6. Pot de santé selon l'une quelconque des revendications 1 à 5, dans lequel une section transversale d'au moins une partie inférieure de la paroi périphérique de la partie de réception (20) est formée de manière à être circulaire et la zone de communication (201) est au moins disposée au niveau de la partie inférieure de la paroi périphérique de la partie de réception, dans lequel au moins la partie inférieure de la paroi périphérique de la partie de réception est de préférence cylindrique et présente de préférence un diamètre intérieur de 20 mm à 120 mm, également de préférence de 60 mm.

7. Pot de santé selon l'une quelconque des revendications 1 à 6, dans lequel la paroi périphérique de la partie de réception (20) comprend :
une première section cylindrique (21), la zone de communication (201) étant disposée dans la première section cylindrique (21) ;
une deuxième section cylindrique (22), la deuxième section cylindrique (22) étant disposée coaxialement au-dessus de la première section cylindrique (21) et un diamètre intérieur de la deuxième section cylindrique (22) est supérieur à un diamètre intérieur de la première section cylindrique (21), et une ouverture supérieure de la deuxième section cylindrique (22) formant une ouverture de placement ;
une section de connexion à diamètre variable (23), un bord inférieur de la section de connexion à diamètre variable (23) étant connecté à un bord supérieur de la première section cylindrique (21), et un bord supérieur de la section de connexion à diamètre variable (23) étant connecté à un bord inférieur de la deuxième section cylindrique (22), et la section de connexion à diamètre variable (23) s'étendant obliquement vers le haut et vers l'extérieur par rapport à une direction axiale de la première section cylindrique (21).

8. Pot de santé selon l'une quelconque des revendications 1 à 7,
dans lequel la partie de corps (10) comprend une partie de corps de pot (11) et une partie de couvercle supérieure (12), et le rebord d'encliquetage (24) est encliqueté avec la partie de corps de pot (11) ou avec la partie de couvercle supérieure (12).

9. Pot de santé selon l'une quelconque des revendications 1 à 8, dans lequel une partie inférieure de la partie de remplacement de milieu (30) est supportée sur la partie de corps (10) ou est supportée au moyen d'une console d'appui dans la partie de corps (10) ;
et/ou
dans lequel la partie de corps (10) comprend une partie de corps de pot (11) et une partie de couvercle supérieure (12), la partie de réception (20) s'étend dans la partie de corps de pot (11), la partie de remplacement de milieu (30) est disposée à l'intérieur de la partie de corps de pot (11) ;
une paroi périphérique de la partie de remplacement de milieu (30) et la paroi périphérique de la partie de réception (20) se rejoignent, ou la partie de remplacement de milieu (30) et la partie de réception (20) sont reliées par encliquetage, soudage, ou rivetage.

10. Pot de santé selon l'une quelconque des revendications 1 à 9, dans lequel la partie de réception (20) est une pièce métallique ou une pièce en verre, et la partie de remplacement de milieu (30) est une pièce métallique ou une pièce en verre ;
et/ou
dans lequel une section transversale de la partie de remplacement de milieu (30) est formée de manière à être circulaire, et une partie inférieure de la partie de remplacement de milieu (30) est dotée d'une sortie de milieu (301) utilisée pour la décharge du deuxième milieu.

11. Pot de santé selon l'une quelconque des revendications 1 à 10, dans lequel la partie de remplacement de milieu (30) est configuré pour être capable de remplacer le deuxième milieu à l'état liquide par le premier milieu à un moment prédéfini, et le moment prédéfini peut être sélectionné de manière à être variable ou fixe ;
et/ou
dans lequel la zone de communication (201) est configurée de telle façon qu'un produit alimentaire (200) dans la partie de réception (20) peut entrer dans la cavité de cuisson (101) par le biais de la zone de communication (201) sous l'action d'un liquide entrant dans la partie de réception (20).

12. Pot de santé selon l'une quelconque des revendications 1 à 11, dans lequel une pluralité de trous de passage allongés (202) sont disposés dans la zone de communication (201),
dans lequel la pluralité de trous de passage (202) sont de préférence espacés le long d'une direction circonférentielle de la partie de réception (20), et une direction longitudinale de chacun des trous de passage s'étend de préférence le long d'une direction axiale de la partie de réception (20).

13. Pot de santé selon l'une quelconque des revendications 1 à 12, dans lequel la partie de remplacement de milieu (30) est configurée comme une partie de remplacement de gaz/liquide, et la partie de remplacement de gaz/liquide est configurée pour remplacer le deuxième milieu à l'état liquide par le premier milieu à l'état gazeux.

14. Pot de santé selon l'une quelconque des revendications 1 à 13, dans lequel le pot de santé est doté d'un élément chauffant commandable, et l'élément chauffant est adapté pour chauffer du liquide afin de produire de la vapeur permettant de former le premier milieu,
et/ou
dans lequel la partie de remplacement de milieu (30) est reliée à une partie inférieure de la partie de réception (20), et une paroi inférieure de la partie de réception (20) est dotée d'un micro-évent de gaz (302) faisant communiquer la partie de réception (20) et la partie de remplacement de milieu (30) de manière à décharger du gaz.
